# EUROPEAN PATENT APPLICATION

(11) **EP 2 075 776 A1**
(43) Date of publication of application: **01.07.2009**
(21) Application number: 07124063.4
(22) Date of filing: 24.12.2007
(51) Int. Cl.: G08G 1/017, G08G 1/16, B60Q 1/52, G07C 5/08

(54) **Method and system for monitoring and reporting recurrent tailgating incidents**

(71) Applicant: Proventa AG, 60329 Frankfurt am main (DE)
(72) Inventor: Calvo de Nó, Diego, 60329 Frankfurt am Main (DE)
(74) Representative: Quintelier, Claude

(57) **Abstract**

The present invention relates to a method for monitoring and reporting recurrent tailgating incidents involving the same tailgating road vehicle, comprising the steps of:
- receiving 211, at a data processing device 114 comprising a database 115, tailgating incident reports 301 from monitoring road vehicles 101, each tailgating incident report 301 reporting tailgating a monitoring road vehicle 101 by a following road vehicle 102, and comprising information 303 for identifying each following road vehicle 102 involved;
- recording 213 in said database 115 each one of said tailgating incident reports 301 with a timestamp; and
- transmitting 215, preferably over a secure network, such as, for instance, VPN over Internet, a message identifying a road vehicle as the following road vehicle 102 in at least a minimum predetermined number of tailgating incident reports 301 with timestamps within a predetermined time interval.

The present invention also relates to a system for carrying out such a method.

## Description

The present invention relates to a method and system for monitoring and reporting recurrent tailgating incidents involving the same tailgating road vehicle.

A major cause of road accidents is a failure by drivers to keep a minimum safe distance with respect to preceding vehicles. When a leading vehicle brakes, or otherwise slows down due to an unforeseen event, the reaction time of the driver of a following vehicle introduces a time lag before the following vehicle starts braking. If the distance between the leading and the following vehicle is insufficient, the two vehicles may collide before the driver of the following vehicle even starts braking. For this reason, this failure to maintain a safe distance with respect to a leading vehicle, known as "tailgating", is recognised as a traffic offence in most countries.

However, in practical terms, it is currently very difficult to enforce traffic rules against tailgating, which is a source of frustration and even anger to road users who see their life and limb endangered by recurrent tailgaters.

In order to address this issue, a number of systems and methods have been proposed to record and/or report tailgating incidents. According to several of these methods and systems, road vehicles can be equipped with systems to detect when they are being tailgated, and then record said tailgating incident and eventually transmit it. For instance, in US Patent Application Publication US 2007/0200690 A1 a method for monitoring and reporting tailgating incidents was disclosed, comprising the steps of:
- receiving, at a data processing device comprising a database, tailgating incident reports from monitoring road vehicles, each tailgating incident report reporting tailgating a monitoring road vehicle by a following road vehicle, and comprising information for identifying each following road vehicle involved; and
- recording in said database each one of said tailgating incident reports with a timestamp.

While this method has the advantage of offering a responsible road user a means of easily reporting tailgating behaviour of other road users which may put him in danger, it also has a number of significant drawbacks.

In particular, this prior art method is insufficiently discriminating. If every tailgating incident is reported, regardless of how significant, the relevant authorities may be overloaded. Systematic and automatic reporting will also endanger the public acceptance of such a method, which could be seen as an intrusion into the privacy of road users. Moreover, to prevent erroneous tailgating incident reports, a number of technical filters are required, so that transmission of a tailgating incident report is not triggered under certain confusing circumstances, such as tight curves. This would increase the cost of the necessary onboard systems in each monitoring road vehicle, further reducing their acceptance. Higher complexity also has a negative impact on reliability. Finally, an automatic reporting method may face legal challenges in jurisdictions with strict data protection laws.

In order to solve these problems, the method of the invention, which is advantageously computer-implemented, comprises, in addition to the abovementioned steps of the prior art, the steps of determining whether said following road vehicle has been identified in at least a minimum predetermined number of tailgating incident reports with timestamps within a predetermined time interval; and transmitting, preferably over a secure network, such as, for instance, VPN over Internet, a message identifying said following road vehicle as a recurrent tailgater.

The biggest risk to road users associated to tailgating is not due to occasional tailgaters, but to a minority of particularly aggressive drivers who are recurrent tailgaters. By exclusively reporting recurrent tailgaters, an effective deterrent against such dangerous and overly aggressive road behaviour is provided, while assuring a broad acceptance among other road users.

Advantageously, each tailgating incident report may comprise an image of the following road vehicle involved in the tailgating incident. Such an image, which may, for example, be captured by an imaging device installed on board the monitoring road vehicle, provides a particularly reliable means of identifying the following road vehicle.

Particularly advantageously, the method of the invention may further comprise the step of recognising an identifying feature, such as a license plate number, in said image, and recording said identifying feature with said tailgating incident report. Using image recognition in this manner facilitates the classification and storage of the tailgating incident reports. Alternatively, this image recognition step may take place in a data processing device onboard the monitoring road vehicle, before the transmission of the tailgating incident report. This would reduce the required bandwidth for the transmission of the tailgating incident report, since it could merely include the identifying feature of the following road vehicle, rather than the whole image. In this case, the tailgating incident report could take the form of just a short text message comprising, for example, the license plate number of the following road vehicle.

Advantageously, each tailgating incident report may further comprise information identifying the monitoring road vehicle. Under certain jurisdictions, this information may be required to enforce legal sanctions against tailgaters. Particularly advantageously, said reporting step may only be carried out if said road vehicle is identified as the following road vehicle in at least a minimum predetermined number of tailgating incident reports from different monitoring road vehicles with timestamps within a predetermined time interval. This would ensure, for instance, that a single tailgating incident that, by accident or intent, was transmitted several times to the remote data processing device, would not be taken into account more than one time.

Advantageously, each tailgating incident report may further comprise a location of the monitoring road vehicle during the tailgating incident. This may also be required for legal sanctions, but could also have the additional advantage of generating statistically relevant geographic data concerning tailgating, which could be useful in regulating traffic flows and road planning.

Advantageously, each tailgating incident report may further comprise a time of the tailgating incident. This may also be required for legal sanctions, and would have the additional advantage of providing the abovementioned timestamp. However, an alternative would be that of recording instead the time at which the tailgating incident report is received at the data processing device or recorded in the database.

The present invention also relates to a computer-readable data storage medium comprising a set of instructions for a data processing device to carry out the abovementioned method according to the invention. As "data storage medium" is understood any physical medium capable of containing data readable by a reading device for at least a certain period of time. Examples of such data storage media are magnetic tapes and discs, optical discs (read-only as well as recordable or re-writable), logical circuit memories, such as read-only memory chips, random-access memory chips and flash memory chips, and even other data storage media, such as chemical, biochemical or mechanical memories.

Advantageously, the method of the invention may additionally comprise the following steps, to be carried out onboard said monitoring road vehicles:
- measuring a speed of a monitoring road vehicle;
- calculating a safe following distance based on said speed;
- measuring an actual following distance of a following road vehicle behind said monitoring road vehicle;
- comparing said safe and actual following distances, and, if said actual following distance is less than said safe following distance, in particular if it is less than said safe following distance during a whole predetermined period of time:

- capturing an image of said following road vehicle;
- generating said tailgating incident report; and
- transmitting said tailgating incident report towards said data processing device.

Since these steps can be reliably performed by simple onboard sensors and data processing devices, it is possible to carry out a decentralised monitoring of tailgating incidents relying on the reports of such incidents from a fleet of monitoring road vehicles.

Advantageously, this method may further comprise a step of signalling, for example by a light, sound and/or haptic signal, a tailgating incident to a driver and/or passenger of the monitoring road vehicle if said actual following distance is less than said safe following distance, in particular if it is less than said safe following distance during a whole predetermined period of time. With this step, the method of the invention can also help increase the situational awareness of the driver of the monitoring road vehicle, making him aware of a dangerous situation in which he should avoid sudden braking.

Automatic transmission of tailgating incident reports may pose a problem of public acceptance. Under some jurisdictions, it could even be in conflict with data privacy legislation. It could be thus be particularly advantageous, if said tailgating incident report is generated and/or transmitted only after approval by a driver and/or passenger of the monitoring road vehicle.

The safe following distance behind a monitoring road vehicle may vary in practice in function of the weather conditions. Advantageously, the method of the invention may thus also comprise a step of sensing weather conditions, such as rain, snow, sleet, or icing conditions, and adapting the calculation of said safe following distance accordingly.

The present invention also relates to system for monitoring and reporting recurrent tailgating incidents involving the same tailgating road vehicle, comprising:
- an onboard system for installation on board at least one monitoring road vehicle, said onboard system comprising, for each of said at least one monitoring road vehicle: a distance sensor for measuring an actual following distance of a following road vehicle; a speed sensor for measuring the speed of the monitoring road vehicle; a data processing device connected to said speed sensor for calculating a safe following distance behind the monitoring road vehicle at the measured speed, and to said distance sensor for comparing said actual following distance to said safe following distance; an imaging device for capturing an image of said following road vehicle; and a wireless transmitter for transmitting a tailgating incident report, including information identifying said following road vehicle; and
- a remote data processing device with : a wireless receiver for receiving said tailgating incident report ; a database for recording each received tailgating incident report with a timestamp; and means for detecting and reporting whether the same following road vehicle was identified in at least a minimum predetermined number of tailgating incident reports in said register with timestamps within a predetermined time interval.

Advantageously, said onboard system may also comprise a device for signalling a tailgating incident to a driver or passenger of the monitoring road vehicle, by, for instance, light, sound and/or haptic signals.

Advantageously, said onboard system may also comprise input means for a driver or passenger of the monitoring road vehicle to allow and/or block the transmission of said tailgating incident report. Said input means could be, for instance, in the form of a touch interface, such as a button, of a voice recognition device, and/or of a motion sensor.

Advantageously, said onboard system may further comprise a global positioning device, such as, for example, a GPS, Galileo, and/or Glonass receiver, for determining the position of said monitoring road vehicle. The position of the monitoring road vehicle at the time of the tailgating incident can thus be reliably determined and included in the tailgating incident report. It may be particularly advantageous if said global positioning device is also an onboard navigation system, allowing precise positioning even when the monitoring road vehicle is out of range of satellite navigation signals. Since said satellite navigation signals also provide time signals, this global positioning device could also provide the timestamp for the tailgating incident report.

Advantageously, said onboard system may further comprise a weather sensor, and said processing device is also connected to said weather sensor, for taking into account weather conditions, such as, for example, rain, sleet, snow and/or ice, in the calculation of said safe following distance. Weather sensors are already known to be installed on board road vehicles, for instance rain sensors are often installed for the automatic activation of windscreen wipers, so that it could simply be contemplated to connect such existing weather sensors to the onboard system.

Advantageously, said onboard system may comprise a mobile phone at least as said wireless transmitter. A tailgating incident report may thus be transmitted using an existing mobile telephony network, as, for example, a text message, a multimedia message, or an e-mail.

A particular embodiment of the invention will now be described in an illustrative, but not restrictive manner, with reference to the following figures:
Fig. 1 shows schematically an embodiment of the monitoring and reporting system of the invention;
Fig. 2a and 2b show a flowchart of an embodiment of the monitoring and reporting method of the invention; and
Fig. 3 shows a tailgating incident report as generated within the monitoring and reporting system of Fig. 1.

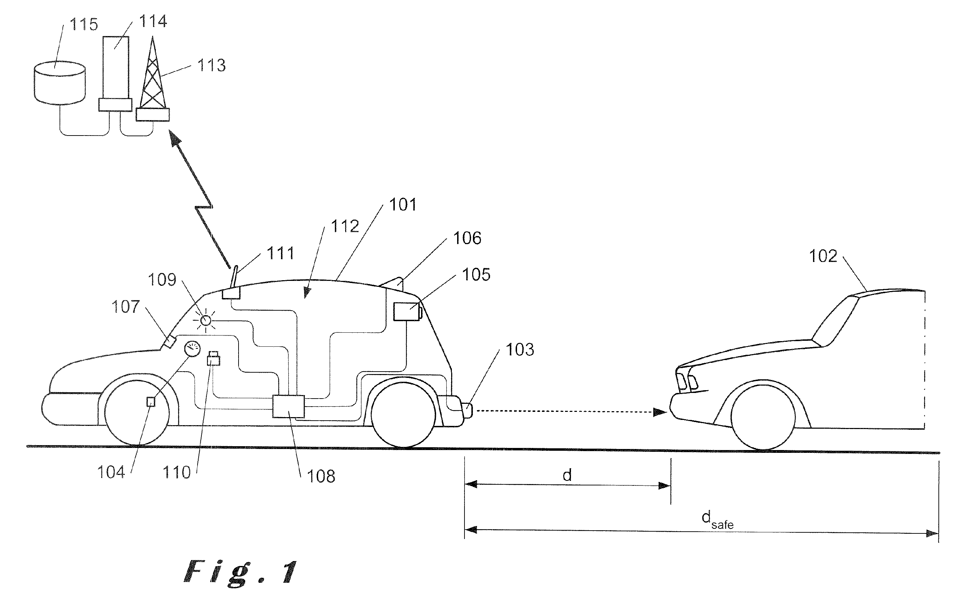

Fig. 1 shows a monitoring road vehicle 101, closely followed by a tailgating road vehicle 102. On board the monitoring road vehicle 101 an onboard system is installed comprising a distance sensor 103, a speed sensor 104, an imaging device 105, a global positioning device 106, a weather sensor 107, an onboard data processing device 108, a signalling device 109, input means 110 and a wireless transmitter 111. Although in the illustrated embodiment these are separate elements connected through a wired network 112, in alternative embodiments at least some of these elements could be connected by wireless means, such as, for instance, a Bluetooth® link or a IEE 802.11 wireless network. Several of these elements could also be integrated into a single device: the global positioning device 106 could also be the speed sensor 104, and it could be integrated into a mobile phone serving also as the wireless transmitter 111, and possibly also incorporating said signalling device 109, said input means 110, by touch or voice command, and/or said data processing device 108.

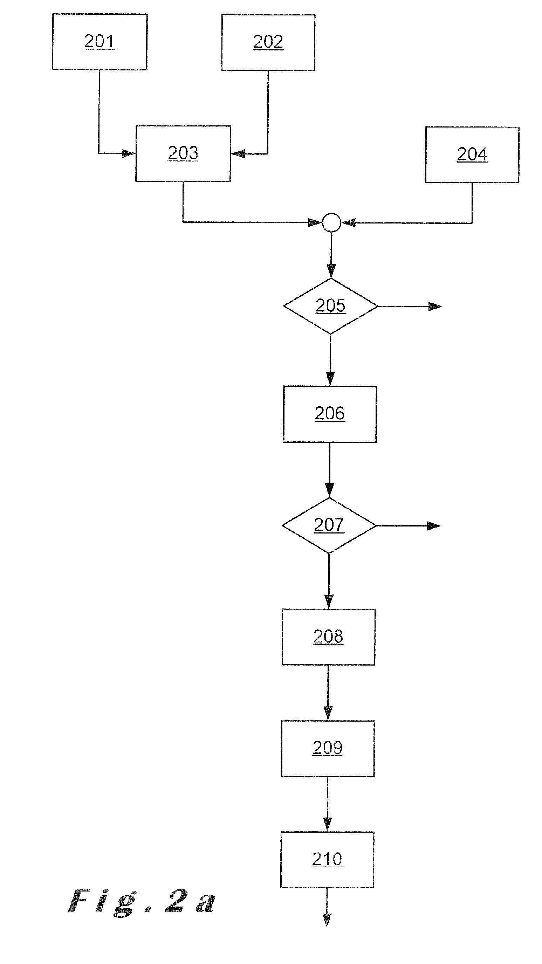

Turning now to the flowchart of Fig. 2a, in a first step 201, the speed sensor 104, which, as indicated above, may also be the global positioning device 106, but in this particular embodiment is a speedometer sensor instead, measures the current speed v of the monitoring road vehicle 101. Simultaneously, in a concurrent step 202, the weather sensor 107 senses the weather conditions. In the next step 203, the onboard data processing device 108 calculates a safe following distance d_{Safe} on the basis of the current speed v, taking into account the weather conditions sensed in step 202. In a concurrent step 204, the distance sensor 103 measures the actual distance d to the following road vehicle. This distance sensor 103 may be any kind of sensor suitable for real time contactless distance measuring or range finding, such as, for example, a laser range finder, an ultrasonic distance sensor, a microwave radar, a stereoscopic range finder, etc.

In the next step 205, the actual distance d is compared with the safe distance d_{Safe} by the onboard data processing device 108, and, if d< d_{Safe}, a tailgating incident is determined. To prevent false positives, a tailgating incident may be determined only if the actual distance d is lower than the safe distance d_{Safe} for at least a minimum amount of time. If said tailgating incident is determined, the onboard data processing device 108 activates a signalling device 109, in this case a light signalling device, to signal the tailgating incident to the driver in a step 206. Alternatively or complementarily, the signalling device 109 may also be a sound- or vibration-emitting device, and/or a display which may also indicate additional information, such as the distance to the following vehicle 102. The driver can then, in a decision 207, trigger or block the transmission of a tailgating incident report through input device 110. Although in Fig. 1 this input device 110 is represented as a push button, the skilled person could consider a number of alternative input devices, such as a voice recognition system, a touchscreen, etc.

Once the driver of the monitoring road vehicle 101 has agreed to transmit a tailgating incident report, in step 208 a backward-facing imaging device captures an image of the following road vehicle 102. Then, in a step 209, the tailgating incident report is generated, and, in step 210, wirelessly transmitted by the transmitter 111.

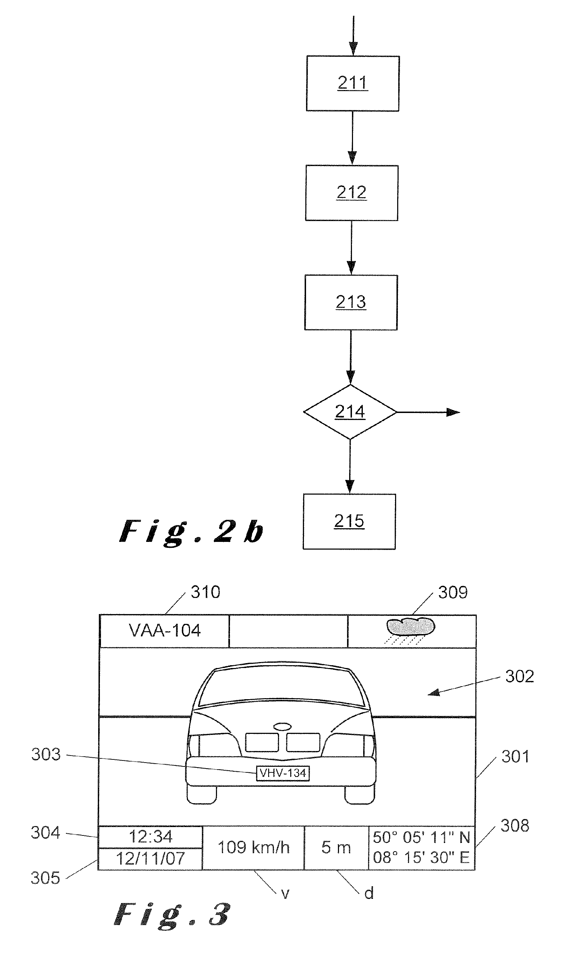

Fig. 3 illustrates an embodiment of such a tailgating incident report 301, transmitted, for example, as a multimedia message (MMS). Besides an image 302 of the following road vehicle 102, with a visible licence plate number 303, the illustrated tailgating incident report 301 includes data from the onboard system, such as a time 304 and date 305, the speed v, the actual distance d to the following road vehicle 102, the geographic coordinates 308 of the current position of the monitoring road vehicle 101, the weather conditions 309, and an identifier 310 of the monitoring road vehicle 101. If the onboard processing device 108 has enough processing power, but the bandwidth of the transmitter 111 is limited, the licence plate number 303 could be extracted from the image 302 using character recognition, and a condensed tailgating incident report without the image 302, but with the licence plate number 303 of the following road vehicle 102 could be sent instead.

Turning back to Figs. 1 and 2b, the tailgating incident reports 301 of a fleet of monitoring road vehicles 101 are received in step 211 at a remote data processing device 114, or server, through a wireless receiver 113. If the licence plate number 303 has not been recognised in the onboard systems, it is recognised by the remote data processing device 114 in step 212. The incoming tailgating incident report is then stored, in step 213, in a database 115. In the illustrated embodiment, the time 304 and date 305 in the tailgating incident report 301 is used as a timestamp, but, alternatively, each tailgating incident report 301 could be stored in the database 115 with a timestamp corresponding to the time at which the tailgating incident report 301 was received.

In step 214 it is then checked whether the same following road vehicle 102 has been reported in at least a predetermined number X of tailgating incident reports during a predetermined time period T. If this check 213 is positive, in the final step 215 the following road vehicle 102 is reported, for example to the police, although, in certain jurisdictions, the tailgater could be reported to his insurance company instead. The road vehicle 102 may be reported via an electronic message, sent preferably over a secure network, such as, for example, VPN over Internet, and include all the tailgating incident reports 301 for that following road vehicle 102 during that time period T. As an additional condition for step 213, it may be checked before whether those X tailgating incident reports 301 came from at least a predetermined number Y of different monitoring road vehicles 101.

The check 213 can also be carried out for several predetermined numbers X and/or Y within several different predetermined time intervals T. So, for example, a following road vehicle 102 may be reported to the police if involved in 15 tailgating incident reports 301 within 15 minutes, or in 100 tailgating incident reports 301 within one month. This message may also receive different priorities accordingly, for instance a high priority for a road vehicle 102 reported in 15 tailgating incident reports 301 within 15 minutes, and a low priority for a road vehicle 102 reported in 100 tailgating incident reports 301 within one month.

Although the present invention has been described with reference to specific exemplary embodiments, it will be evident that various modifications and changes may be made to these embodiments without departing from the broader scope of the invention as set forth in the claims. Accordingly, the description and drawings are to be regarded in an illustrative sense rather than a restrictive sense.

## Claims

1. A method for monitoring and reporting recurrent tailgating incidents involving the same tailgating road vehicle, comprising the steps of:
- receiving (211), at a data processing device (114) comprising a database (115), tailgating incident reports (301) from monitoring road vehicles (101), each tailgating incident report (301) reporting tailgating a monitoring road vehicle (101) by a following road vehicle (102), and comprising information for identifying each following road vehicle (102) involved;
- recording (213) in said database (115) each one of said tailgating incident reports (301) with a timestamp; and
**characterised in that** it further comprises the steps of:
- determining (214) whether said following road vehicle (102) has been identified in at least a minimum predetermined number of tailgating incident reports (301) with timestamps within a predetermined time interval; and
- transmitting (215), preferably over a secure network, such as, for instance, VPN over Internet, a message identifying said following road vehicle (102) as a recurrent tailgater.

2. A method according to claim 1, wherein each tailgating incident report (301) comprises an image (302) of the following road vehicle (102) involved in the tailgating incident.

3. A method according to claim 2, further comprising the step (212) of recognising an identifying feature, such as a license plate number (303), in said image (302), and wherein said identifying feature is recorded with said tailgating incident report (301) in said database (115).

4. A method according to any one of the previous claims, wherein each tailgating incident report (301) further comprises information identifying the monitoring road vehicle (101).

5. A method according to claim 4, wherein said reporting step is only carried out if said road vehicle is identified as the following road vehicle (102) in at least a minimum predetermined number of tailgating incident reports (301) from different monitoring road vehicles (101) with timestamps within a predetermined time interval.

6. A method according to any one of the previous claims, wherein each tailgating incident report (301) further comprises a location (308) of the monitoring road vehicle (101) during the tailgating incident.

7. A method according to any one of claims 1 to 6, wherein each tailgating incident report (301) further comprises a time (304) of the tailgating incident.

8. A method according to any one of claims 1 to 7, also comprising the steps of:
- measuring (201) a speed (v) of a monitoring road vehicle (101);
- calculating (203) a safe following distance (d_{Safe}) based on said speed (v);
- measuring (204) an actual following distance (d) of a following road vehicle (102) behind said monitoring road vehicle (101);
- comparing (205) said safe and actual following distances (d_{Safe},d), and, if said actual following distance (d) is less than said safe following distance (d_{Safe}), in particular if it is less than said safe following distance (d_{Safe}) during a whole predetermined period of time:
- capturing (208) an image (302) of said following road vehicle (102);
- generating (209) said tailgating incident report (301); and
- transmitting (210) said tailgating incident report towards said data processing device.

9. A method according to claim 8, further comprising a step of signalling (206), for example by a light, sound and/or haptic signal, a tailgating incident to a driver and/or passenger of the monitoring road vehicle (101) if said actual following distance (d) is less than said safe following distance (d_{Safe}), in particular if it is less than said safe following distance during a whole predetermined period of time (d_{Safe}).

10. A method according to any one of claims 8 or 9, wherein said tailgating incident report (301) is generated and/or transmitted only after approval (207) by a driver and/or passenger of the monitoring road vehicle (101).

11. A method according to any one of claims 8 to 10, also comprising a step (202) of sensing weather conditions (309), such as rain, snow, sleet, or icing conditions, and adapting the calculation (203) of said safe following distance (d_{Safe}) accordingly.

12. A system for monitoring and reporting recurrent tailgating incidents involving the same tailgating road vehicle, comprising:
- an onboard system for installation on board at least one monitoring road vehicle (101), said onboard system comprising, for each of said at least one monitoring road vehicle (101):
- a distance sensor (103) for measuring an actual following distance (d) of a following road vehicle (102);
- a speed sensor (104) for measuring the speed (v) of the monitoring road vehicle (101);
- a data processing device (108) connected to said speed sensor (104) for calculating a safe following distance (d_{Safe}) behind the monitoring road vehicle (101) at the measured speed (v), and to said distance sensor (103) for comparing said actual following distance (d) to said safe following distance (d_{Safe});
- an imaging device (105) for capturing an image (302) of said following road vehicle (102); and
- a wireless transmitter (111) for transmitting a tailgating incident report (301), including information (303) for identifying said following road vehicle (102); and
- a remote data processing device (114) with :
- a wireless receiver (113) for receiving said tailgating incident report (303); and
- a database (115) for recording each received tailgating incident report (301) with a timestamp;
**characterised in that** said remote data processing device (114) further comprises means for detecting and reporting whether the same following road vehicle (102) was identified in at least a minimum predetermined number of tailgating incident reports (301) in said register with timestamps within a predetermined time interval.

13. A system according to claim 12, wherein said onboard system also comprises a device (109) for signalling a tailgating incident to a driver and/or passenger of the monitoring road vehicle (101), by, for instance, light, sound and/or haptic signals.

14. A system according to claims 12 or 13, wherein said onboard system also comprises input means (110) for a driver and/or passenger of the monitoring road vehicle (101) to allow and/or block the transmission of said tailgating incident report (301).

15. A system according to any one of claims 12 to 14, wherein said onboard system further comprises a global positioning device (106), such as, for example, a GPS, Galileo, and/or Glonass receiver, for determining the position of said monitoring road vehicle (101).

16. A system according to any one of claims 12 to 15, wherein said onboard system further comprises a weather sensor (107), and said onboard data processing device (108) is also connected to said weather sensor (107), for taking into account weather conditions (309), such as, for example, rain, sleet, snow and/or ice, in the calculation of said safe following distance (d_{Safe}).

17. A system according to any one of claims 1 to 7, comprising a mobile phone at least as said wireless transmitter (111).

18. A computer-readable data storage medium comprising a set of instructions for a data processing device to carry out a method according to any one of claims 1 to 7.
